Europäisches Patentamt

European Patent Office

Office européen des brevets

(11) Veröffentlichungsnummer: 0 154 333
A2

(12) **EUROPÄISCHE PATENTANMELDUNG**

(21) Anmeldenummer: 85102491.9

(22) Anmeldetag: 06.03.85

(51) Int. Cl.⁴: **B 29 B 17/00**
**B 29 B 13/06**
**//B29K21:00**

(30) Priorität: 08.03.84 DE 3408493

(43) Veröffentlichungstag der Anmeldung:
11.09.85 Patentblatt 85/37

(84) Benannte Vertragsstaaten:
FR GB IT NL

(71) Anmelder: Ingenieurbüro S. Ficker Verfahrenstechnik
Elsässer Strasse 30
D-8000 München 80(DE)

(72) Erfinder: Ficker, Stefan
Elsässer Strasse 30
D-8000 München 80(DE)

(54) Verfahren und Vorrichtung zur kontinuierlichen trockenen und drucklosen Regenerierung von Altgummi.

(57) Der von Drahteinlagen und ggf. weitgehend vom Gewebe befreite, zerkleinerte Altgummi wird in einem zweistufigen Verfahren so auf Regeneriertemperatur erhitzt, daß ein Teil der erforderlichen Gesamtwärme durch Mikrowellenheizung und der Rest durch Konvektionsheizung z.B. mit einer Heizschnecke eingebracht wird. Das in der ersten Stufe vorgeheizte Material wird so in die zweite Stufe übergeführt, daß die relative Lage aller Partikel zueinander möglichst unverändert bleibt. Da das Temperaturprofil bei Mikrowellenheizung ein Maximum im Innerern und Minima am Rand zeigt und das Profil bei Konvektionsheizung umgekehrt verläuft, kann durch diese Kombination der zwei verschiedenen Heizungsarten der Temperaturverlauf im Gut sehr vergleichmäßigt werden. So können, da konvektiv nicht mehr so hoch aufgeheizt zu werden braucht, Anbackungen und Verkrustungen vermieden und die Qualität des erzeugten Regenerates entscheidend verbessert werden und anstelle der selbstreinigenden Doppelschneckenapparate mit ineinander kämmenden Schnecken wird die Verwendung von Einschneckenwärmetauschern (einwellige Hohlschneckenwärmetauscher) ermöglicht. Einschneckenapparate haben u.a. den Vorteil, daß Schneckenblätter mit rechteckigem Querschnitt verwendet werden können, die eine gleichmäßigere Wärmezufuhr zu allen Partien des Behandlungsgutes als kurvenförmige gewährleisten. Besondere Ausführungsformen sehen spezielle Beschichtungen des Schneckenwärmetauschers vor, die auch bei durch Betriebsstörungen verursachter Temperaturüberschreitung Anbackungen und Verkrustungen verhindern.

Fig. 1

Fig. 2

T °C — S (mm)

Abstand von der Heizfläche

(mm)

Rand — Rand

Mitte

EP 0 154 333 A2

Verfahren und Vorrichtung zur kontinuierlichen trockenen und drucklosen Regenerierung von Altgummi

Die vorliegende Erfindung betrifft eine weitere Verbesserung des drucklosen, trockenen und kontinuierlichen Regenerierverfahrens von Altgummi mit Hohlschneckenapparaten und Vorrichtungen zu dessen Durchführung, die unter voller Wahrung der bekannten Vorteile dieses Verfahrens, insbesondere seiner Umweltfreundlichkeit, unter gleichzeitiger Erhöhung des Durchsatzes bei gegebener Wärmeaustauschfläche, also auch für einen gegebenen Apparat, eine entscheidende Verbesserung der Qualität des erzeugten Regenerates ermöglicht.

Die Erfindung verwendet das obige bekannte Grundprinzip, den von den Einlagen wie Gewebe und/oder Stahldrähten befreiten und auf geeignete Stückgröße wie 1 bis 5 mm zerkleinerten Altgummi in Anwesenheit von Weichmachern und Regeneriermitteln wie NAFTOLEN und RENACIT durch Erhitzung zu depolymerisieren und anschließend rasch wieder abzukühlen. Im Nachstehenden sind unter Altgummi durchgehend sowohl synthetische Gummis wie BUNA oder dgl. wie auch gebrauchter Naturgummi zu verstehen, wie sie auch in Form gebrauchter Fahrzeugreifen anfallen. Abgenutzte Fahrzeugreifen stellen auch mit über 200 Mio. Stück jährlich weltweit (West) bzw. 25 Mio. Stück in der Bundesrepublik Deutschland den weitaus größten Teil des für die Regenerierung in Betracht kommenden Altgummiabfalles.

Es ist bekannt, daß das die Regenerierung bewirkende Aufbrechen der chemischen Bindungen (jedoch nicht die Schwefelbrücken) in den Molekülen der Gummikomponenten nicht unterhalb einer kritischen Schwellentemperatur einsetzt, die je nach Art des eingesetzten Altmaterials bei etwa 150-180° C liegt und daß ein Überschreiten sowohl der optimalen Regeneriertemperatur wie auch der optimalen Verweilzeit bei dieser oder gar höherer Temperatur das von einer starken Qualitätseinbuße begleitete "Überregenerieren" bewirkt, und daß die gegenüber Neugummi deutlich verschlechterte Qualität aller bekannten Regenerate nicht zuletzt dadurch bedingt ist, daß bei allen bekannten Verfahren stets nicht nur

**0154333**

die einzelnen Altgummipartikel sondern auch die verschiedenen Zonen jedes Partikels verschiedenen Temperaturen verschieden lang ausgesetzt sind, weshalb bisher Über- und/oder Unterregenerierung erheblicher Anteile des eingesetzten Materials unvermeidlich sind.

Tatsächlich angewendet wird heute beim Gummiregenerieren fast nur das Autoklav-Verfahren, bei dem der Altgummi unter Druck und Wärme mit Chemikalien behandelt wird. Jedoch ist dieses Verfahren sowohl wegen schwieriger Handhabung und Unwirtschaftlichkeit wie auch vor allem wegen erheblicher Umweltbelastung in entwickelten Ländern bedeutungslos. Außerdem haften ihm alle Nachteile eines vielstündigen (5-12 h) diskontinuierlichen Verfahrens an.

Das einzige, wenn auch nur in geringstem Umfang angewendete trockene Regenerierverfahren ist das Extrusionsverfahren, bei dem die für die Regenerierung erforderliche Wärme durch Konvektion und gleichzeitig durch hohen Preßdruck in den Altgummi eingebracht wird. Wegen hoher Anlage- und Betriebskosten sowie wegen schlechter Qualität des Regenerates ist dieses Verfahren praktisch überholt.

Gemäß vorliegender Erfindung wird eine wesentliche Vergleichmäßigung der Temperaturverteilung beim Regeneriervorgang sowohl im Haufwerk von Korn zu Korn wie auch innerhalb der einzelnen Körner selbst und damit eine erhebliche Qualitätsverbesserung des gewonnenen Regenerates dadurch erzielt, daß die zur Aufheizung erforderliche Wärme nur zum Teil durch Konvektion in das Material eingebracht wird und zu einem anderen Teil durch die an sich bekannte Heizung mit Mikrowellen. In der Bundesrepublik Deutschland ist für diesen Zweck die Frequenz von 2450 ± 50 MHz genormt. Die Erfindung macht sich damit die Tatsache zunutze, daß die räumliche Temperaturverteilung bei dieser Heizungsart gerade den entgegengesetzten Verlauf nimmt wie die bei der Konvektionsheizung auftretende. Während die

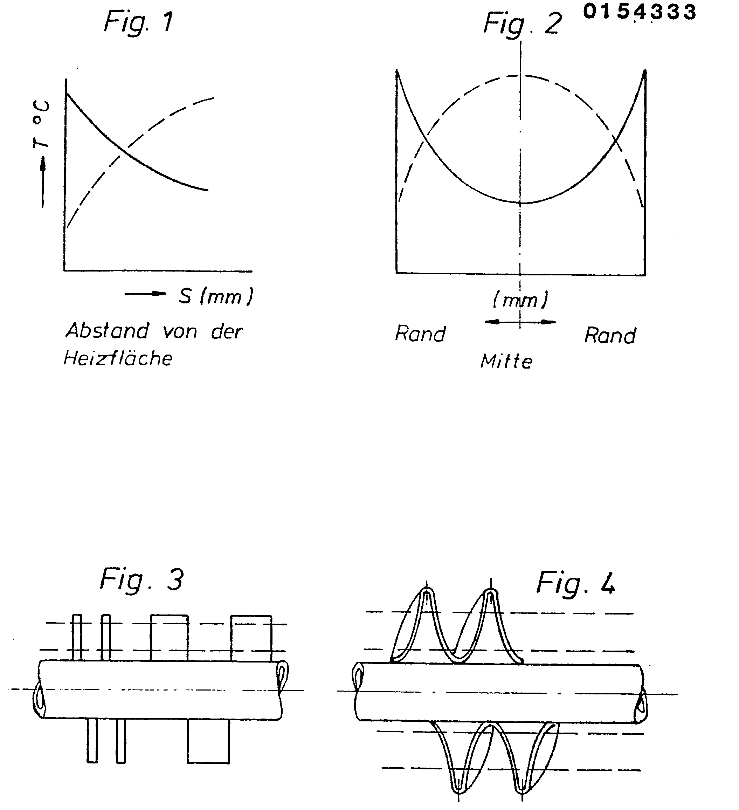

Temperaturverteilung bei Konvektionsheizung von den in den Figuren 1 und 2 voll ausgezogenen Linien dargestellt wird, entspricht sie bei Mikrowellenheizung den gestrichelt eingezeichneten Linien, wobei Figur 1 das Temperaturprofil im Haufwerk und Figur 2 das Temperaturprofil innerhalb des einzelnen Korns darstellt.

Durch geeignete Überlagerung dieser beiden entgegengesetzten Temperaturprofile ist es erfindungsgemäß möglich, sowohl den Temperaturverlauf im Haufwerk wie auch in den einzelnen Körnern selbst und zwar weitgehend zu egalisieren, was nach allen bekannten Verfahren nicht möglich ist.

Je nach Gummitype mag es zweckmäßig sein, zwischen beiden Heizsystemen eine gewisse Zwischenverweilzeit einzulegen, um damit eine weitere Vergleichmäßigung des Temperaturverlaufes sowohl im Haufwerk wie auch im Korn bewirken.

Auf jeden Fall ist es erfindungsgemäß außerdem wesentlich, das Gut sofort nach Beendigung der Regenerierung durch eine rasche zwangsweise Kühlung, vorzugsweise mit einem Kühlwalzwerk, unter die Regeneriertemperatur abzukühlen, am besten auf eine Temperatur unter $60^o$ C.

Die Anwendung der Hochfrequenzheizung für die Zwecke der Kautschukregenerierung ist zwar durch die FR-PS 919 385 und die CH-PS 245 370 sowie zum Zweck der Entschwefelung durch die DE-OS 3224 609, im letzteren Fall auch in Verbindung mit anschließender rascher Abkühlung, allerdings durch direkte Wassereinspritzung, bereits vorgeschlagen worden. Jedoch ist in keinem dieser Fälle diese Heizungsart mit praktisch simultaner Konvektionsheizung vorgesehen, weshalb nach diesen bekannten Verfahren eine Vergleichmäßigung des Temperaturverlaufes ebenso wenig erreichbar war wie bei den bekannten Verfahren mit Konvektionsheizung, was in der CH-PS 245 370 auch ausdrücklich zugegeben ist.

Durch die erfindungsgemäße Kombination der beiden verschiedenen Heizmethoden- bei Anlagen in Betriebsgröße - können die sowohl bei den bekannten Verfahren mit Konvektionsheizung wie

auch den mit Mikrowellenheizung auftretenden Temperaturdifferenzen zwischen den verschiedenen Partien des eingesetzten
Materials von meist über $100^o$ C (teilweise wurden sogar Temperaturdifferenzen von über $140^o$ C gemessen) auf $15 - 20^o$ C bei
guter Prozessführung reduziert werden.

Da für die Konvektionsheizung gut wärmeleitende, also praktisch
nur metallische Wärmeübertragungsflächen zweckmäßig sind, die
aber für die Hochfrequenzstrahlung nicht transparent bzw. elektrisch anwendbar sind und daher für die Mikrowellenheizung nicht
in Betracht kommen, ist es für die Zwecke der vorliegenden Erfindung notwendig oder mindestens zweckmäßig, die beiden verschiedenen Heizungsarten nicht gleichzeitig, sondern nacheinander in verschiedenen Apparaten einzusetzen. Obwohl keine der
beiden denkbaren Reihenfolgen grundsätzlich ausgeschlossen zu
werden braucht, wird vorzugsweise die Mikrowellenheizung in der
ersten und die Konvektionsheizung in der zeiten Stufe angewendet.

Der Vorteil dieser bevorzugten Reihenfolge besteht vor allem
darin, daß die Temperatur des Heizmittels und somit auch der
Regenerierschnecke in der Stufe der Konvektionsheizung niedriger gehalten werden kann und zwar praktisch meist um $20-50^o$ C
als bei der umgekehrten Reihenfolge. Die dadurch ermöglichte
Vermeidung von Anbackungen erlaubt den weiteren Vorteil, an
Stelle des bisher für die Konvektionsheizung von Altgummi unentbehrlichen selbstreinigenden Zweischneckenapparates mit ineinander kämmenden Schnecken einen Einschneckenapparat zu verwenden, wodurch eine Reihe weiterer Vorteile erzielt werden.
Zweckmäßig ist in diesem Falle die Beschichtung der Schneckenoberfläche, gegebenenfalls auch der Innenwand des zylindrischen Gehäuses mit Polymeren von mindestens teilweise fluorierten und in jedem Falle voll halogenierten Olefinen mit gutem Anti-Haftverhalten, denen vorteilhaft durch eingebundene festigkeitserhöhende mineralische Zusätze eine ausreichende Härte
bei ca. $250^o$ C verliehen worden ist.

Solche Beschichtungen sind in anderem Zusammenhang bekannt. Als Grundsubstanz für die Aufnahme der festigkeitserhöhenden Zusätze kommen insbesondere Polymerisate von TFE (Polytetrafluoräthylen), FEP (Fluor-äthylen und -propylenmischpolymerisat), CTFE (Monochlortrifluoräthylen) und Copolymerisate von Äthylen und Monochlortrifluoräthylen - ECTFE - in Betracht. Erfindungsgemäß geeignete festigkeitserhöhende Zusätze sind sowohl Mineralstoffe wie Glimmer wie auch hochtemperaturbeständige Harze.

Es wurde nämlich gefunden, daß es bei geeigneter Auswahl der Beschichtungsmaterialien möglich ist, Beschichtungen herzustellen, an denen selbst hochgradig klebende und zum Anbacken und Verkrusten neigende Zwischenprodukte, wie sie beim Erhitzen von Altgummi auf und über Regeneriertemperatur auftreten und deren Bildung auch beim erfindungsgemäßen Verfahren im kurzzeitigen Störungsfall denkbar ist, nicht ankleben.

Als Auswahlkriterien können folgende Materialwerte dienen, die alle gleichzeitig erfüllt sein sollen, um eine optimale Beschichtung zu ergeben: Pendelhärte nach König DIN 53 157 bei 20 $\mu$ Schichtdicke = 100 bis 120 $\mu$m; Tiefung nach Erichsen DIN 53 156 höchstens 2 bis 4 mm; Temperaturbeständigkeit bei Dauergebrauch mindestens 220$^\circ$ C, bei kurzzeitiger Erhitzung 250$^\circ$C.

Ein eklatanter Vorteil des Einschneckenapparates gegenüber dem Zweischneckenapparat sind zunächst die durch seine einfachere Geometrie ermöglichten geringeren Maßtoleranzen und damit eine problemlose Herstellung von Schnecke und rundem Trog. Ein weiterer Vorteil ist die Verkleinerung der toten Räume und der damit ermöglichte höhere Füllungsgrad sowie die gleichmäßigere Verweilzeit aller Partikel. Darüber hinaus ist es mit dieser bevorzugten Ausgestaltung der Erfindung erstmalig möglich, bei entsprechender Verfahrensführung alle Anbackungen 100 %ig auszuschalten, wodurch sowohl eine Qualitätsverbesserung des erzeugten Regenerates als auch ein besserer Wärmeübergang und damit - bezogen auf die Wärmeaustauschfläche - ein erhöhter Durchsatz ermöglicht wird.

Obwohl all diese Vorteile schon neue Maßstäbe setzen, fällt für die Zwecke der vorliegenden Erfindung noch ein weiterer Vorteil stark ins Gewicht, nämlich der, daß es beim Einschneckenapparat möglich ist, Schneckenblätter mit rechteckigem und vorzugsweise quadratischem Querschnitt zu verwenden (vgl. Fig.3) anstelle der für ineinander kämmende Doppelschnecken unentbehrlichen Schneckenblätter mit kurvenförmigem Querschnitt (vgl. Fig.4). Dadurch ist gewährleistet, daß das Behandlungsgut in jedem Abstand von der Achse die gleiche Schichtdicke - gerechnet von Schneckenflanke zu Schneckenflanke - hat (s. gepunktete Linien Fig.3 und Fig.4) und daher bei der Erhitzung weitgehend die gleiche Durchschnittstemperatur erhält. Im Gegensatz dazu wird von den Schneckenblättern der bisher allein für die trockene Gummiregenerierung verwendbaren Zweischneckenapparate in verschiedenen Abständen von der Schneckenachse die gleiche Wärmemenge in verschieden große Materialmengen eingebracht, wodurch diese verschieden stark erwärmt werden.

Bei der bevorzugten Ausführungsform der Erfindung, bei welcher die Hochfrequenz-Heizung in der ersten Verfahrensstufe angewendet wird, wird das Behandlungsgut in der ersten Stufe (MW-Heizung) auf eine Guttemperatur im Innenbereich des HF-Heizkanales erhitzt, die nahe oder ganz an der Regeneriertemperatur liegt. Das so erhitzte Innenmaterial wird dann, gegebenenfalls nach einer passend gewählten Zwischenverweilzeit, der vorzugsweise als Hohlschneckenwärmetauscher ausgebildeten Regenerierschnecke zugeführt, in der dann das Gut des Außenbereiches auf die volle Regeneriertemperatur von - je nach Art des zu regenerierenden Materials - 180° bis 240° weitergeheizt und somit depolymerisiert wird.

Für die Verfahrensstufe der Mikrowellenheizung ist z.B. ein einfaches Förderband aus zweckmäßig für Mikrowellen transparentem Material wie Kunststoff mit einer darüber und gegebenenfalls auch darunter angeordneten HF-Strahlungsquelle geeignet oder auch ein senkrechter Schacht an dessen oberem und unterem Ende geeignete Dämpfungselemente zur Verhinderung des Austrittes von

- 7 -

Mikrowellenstrahlen angeordnet sind. In jedem Falle soll der Übergang von der ersten auf die zweite Verfahrensstufe so erfolgen, daß die Lage aller Partikel relativ zueinander möglichst unverändert bleibt, um eine möglichst vollständige Gegenwirkung zu der in der ersten Stufe erreichten räumlichen Temperaturverteilung zu erreichen. Aus diesem Grunde sollen die Füllquerschnitte des Mikrowellenkanals und des Konvektionsheizgerätes, z.B. einer Heizschnecke, vorzugsweise sowohl nach bsoluter Größe wie auch nach geometrischer Gestalt möglichst gleich sein

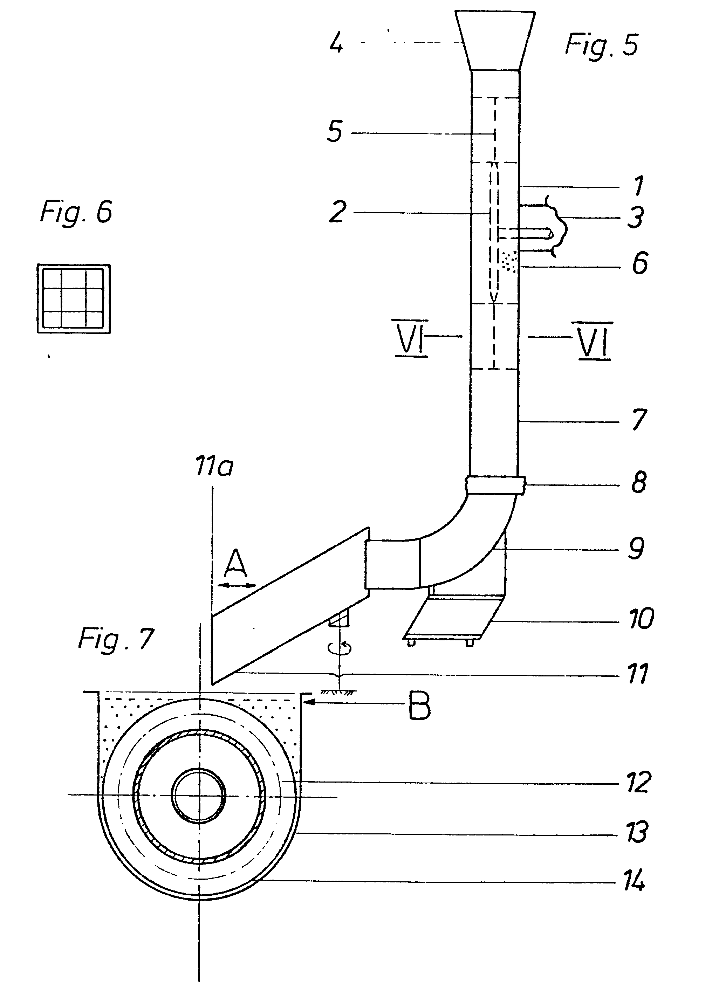

Eine bevorzugte Ausführungsform der Erfindung ist nachstehend an Hand der Figuren 5 bis 7 beispielsweise näher erläutert.

Fig. 5 ist ein senkrechter Schnitt durch einen für die Stufe der Mikrowellenheizung bestimmten Kanal.

Fig. 6 ist ein Horizontalschnitt längs der Linie VI - VI der Fig. 5.

Fig. 7 ist ein senkrechter Schnitt durch den für die Verfahrensstufe der Konvektionsheizung bestimmten Teil der Gesamtvorrichtung.

In den Figuren bedeutet 1 den Mikrowellen-Heizkanal, 2 die die Mikrowellen aussendende Sprühelektrode, 3 das die Sprühelektrode 2 speisende Magnetron. 4 ist der Aufgabetrichter, 5 sind die Dämpfungskamine, die ein Austreten der Mikrowellenstrahlen aus dem Kanal 1 verhindern. Mit 6 ist das Haufwerk von den Gummipartikeln angedeutet, 7 ist ein Zwischenkanal, in dem das aus der ersten Verfahrensstufe austretende Gut eine bestimmte Zeit lang unbeheizt verweilen kann. Die Länge dieses Zwischenkanals und damit die Dauer der Zwischenverweilzeit ist vorzugsweise einstellbar. Über ein flexibles Verbindungsstück 8 und das Bogenstück 9 ist der Zwischenkanal 7 mit der Schwingförderrinne 10 verbunden, durch welche das aus der Zone 7 austretende Haufwerk ohne Störung seiner Schichtung mit genau einstellbarer Durch-

- 8 -

laufgeschwindigkeit der Aufgaberinne 11 aufgegeben werden kann, womit gleichzeitig die Verweilzeit im Mikrowellenkanal 1 und damit das Ausmaß der in diesem bewirkten Aufheizung geregelt werden kann.

Die Aufgaberinne 11 gibt ihrerseits das Material dem als Regenerierschnecke 12 dienenden, mit Heizflüssigkeit beaufschlagten Hohlschneckenwärmetauscher in der Mitte des ersten Schneckenganges auf und folgt dieser mit gleicher Axialgeschwindigkeit, so daß immer eine mittige Aufgabe in den Schneckengang gewährleistet ist bis zum Ende des ersten Schneckenganges, worauf sie sehr rasch wieder an den Ausgangspunkt zurückkehrt, wobei sich dieser Vorgang stetig wiederholt. Außerdem ist das Aufgabeende 11 a der Aufgaberinne 11 vor- und rückwärts verschieb- und einstellbar, wie durch Pfeil A angedeutet, um sicherstellen zu können, daß das Aufgabegut stets so einfällt, daß es zu beiden Seiten des Schneckenganges gleichmäßig abfällt und damit den Trog 13 gleichmäßig anfüllt, vgl. Pfeil B.

PATENTANSPRÜCHE

1. Verfahren zum kontinuierlichen, drucklosen und trockenen Regenerieren von Altgummi und/oder Kunststoffprodukten durch Erhitzen des von Metalleinlagen und/oder Textileinlagen befreiten und zerkleinerten Materials auf Regeneriertemperatur vorzugsweise im Bereich von 180° bis 240°C in Anwesenheit von Regeneriermitteln und sofort anschließende, rasche zwangsweise Abkühlung nach erfolgter Regenerierung, dadurch gekennzeichnet, daß in einem zweistufigen Verfahren ein Teil der für die Erhitzung auf Regeneriertemperatur erforderlichen Wärme in einem Verfahrensschritt durch Mikrowellenheizung und ein weiterer Teil in einem zeitlich vor- oder nachgeschalteten Verfahrensschritt durch Konvektionsheizung in das zu regenerierende Material eingebracht wird, wobei das in der ersten Verfahrensstufe aufgeheizte Material so in die zweite Stufe übergeführt wird, daß die relative Lage aller Partikel zueinander weitgehend unverändert bleibt.

2. Verfahren nach Anspruch 1, dadurch gekennzeichnet, daß die Mikrowellenheizung in der ersten Verfahrensstufe angewendet wird.

3. Verfahren nach den Ansprüchen 1 und 2, dadurch gekennzeichnet, daß die Konvektionsheizung mit Hilfe eines Hohlschneckenwärmeaustauschers durchgeführt wird.

4. Verfahren nach den Ansprüchen 1 bis 3, dadurch gekennzeichnet, daß zwischen den beiden Heizstufen eine heizungslose Zwischenverweilzeit eingelegt wird.

5. Vorrichtung für die Durchführung des Verfahrens nach den Ansprüchen 1 bis 4, enthaltend einen Hohlschneckenwärmeaustauscher, gekennzeichnet durch einen mit einer Aufgabevorrichtung (4), einer Sprühelektrode (2) und zwei vor und hinter der Sprühelektrode angeordneten Dämpfungskaminen (5) versehenen Mikrowellenheizkanal (1), an den über einen Überführungsbogen (9) eine mit diesem verbundene Schwingförderrinne (11) entleert, die ihrerseits in eine heizbare Regenerierschnecke (12) entladet.

6. Vorrichtung nach Anspruch 5, dadurch gekennzeichnet, daß die Regenerierschnecke aus einer in einem zylindrischen Gehäuse (13) angeordneten einzigen hohlen mit Heizflüssigkeit beaufschlagten Schnecke (12) besteht.

7. Vorrichtung nach Anspruch 6, dadurch gekennzeichnet, daß die hohlen Blätter des Einschneckenwärmeaustauschers rechteckigen und vorzugsweise quadratischen Querschnitt haben.

8. Vorrichtung nach den Ansprüchen 6 und 7, dadurch gekennzeichnet, daß der Heizkanal (1) ebenfalls rechteckigen und vorzugsweise quadratischen Querschnitt hat, vorzugsweise mit den gleichen oder ähnlichen Abmessungen wie die Schneckenblätter (14) des Einschneckenwärmeaustauschers (12).

9. Vorrichtung nach den Ansprüchen 5 bis 8, dadurch gekennzeichnet, daß mindestens die Schneckenblätter (14) und vorzugsweise auch die Innenseite des Gehäuses (13) der Regenerierschnecke (12) mit einer Überzugsschicht aus mit festigkeitserhöhenden Zusätzen versetzten Polymerisaten von mindestens teilweise fluorierten und voll halogenierten Olefinen bedeckt sind.

10. Vorrichtung nach Anspruch 9, dadurch gekennzeichnet, daß die Überzugsschicht eine Pendelhärte nach König DIN 53 157 von 100 bis 120 sec bei 20 /u und eine Tiefung nach Erichsen von 2 bis 4 mm bei 20 /u hat.

11. Vorrichtung nach den Ansprüchen 5 bis 10 dadurch gekennzeichnet, daß das vor- und rückwärts einstellbare Austragsende (11a) der Aufgaberinne (11) in Richtung des Axialvorschubes der Regenerierschnecke (12) mit gleicher Geschwindigkeit wie die Vorschubgeschwindigkeit der Schnecke beweglich ist.

1/2

Fig. 1

Fig. 2     0154333

$T\ °C$

$S\ (mm)$

Abstand von der
Heizfläche

(mm)

Rand          Rand

Mitte

Fig. 3

Fig. 4

0154333

4 · · · · · · · Fig. 5

5

Fig. 6

2

1

3

6

VI ─── ── VI

7

11a

8

9

A

10

Fig. 7

11

B

12

13

14